# EUROPÄISCHE PATENTSCHRIFT

(11) **EP 1 974 191 B1**
(45) Veröffentlichungstag und Bekanntmachung des Hinweises auf die Patenterteilung: **29.12.2010**
(21) Anmeldenummer: 07702367.9
(22) Anmeldetag: 19.01.2007
(51) Int. Cl.: G01G 23/00

(54) **WÄGEAUFNEHMER**
WEIGHING SENSOR
CAPTEUR DE PESEE

(30) Priorität: 19.01.2006 DE 102006002711
(43) Veröffentlichungstag der Anmeldung: 01.10.2008
(73) Patentinhaber: Wipotec Wiege- und Positioniersysteme GmbH, 67657 Kaiserslautern (DE)
(72) Erfinder: HAUCK, Timo, 67663 Kaiserslautern (DE)
(74) Vertreter: Mischung, Ralf
(86) Internationale Anmeldenummer: PCT/DE2007/000086
(87) Internationale Veröffentlichungsnummer: WO 2007/082512

(56) Entgegenhaltungen:
- EP-A2- 0 981 041
- DE-U1- 9 318 284

## Beschreibung

Die vorliegende Erfindung betrifft einen vorzugsweise monolithisch ausgebildeten Wägeaufnehmer, wie er insbesondere für Rotationsfüller oder Mehrkopfwaagen eingesetzt wird.

Derartige Wägeaufnehmer sind vorteilhaft kreisförmig angeordnet, wobei auf einem möglichst kleinen Teilkreis ein Maximum an Wägezellen unterzubringen versucht wird, um Bauraum einzusparen.

In der Getränkeindustrie sind Rotationsfüller, beispielsweise gemäß der DE 20304296 U bekannt, bei denen zahlreiche Abfüllstationen kreisförmig angeordnet sind und bedingt durch die kontinuierliche Abfüllung sehr hohe Produktdurchsätze erreichbar sind. Diese Abfüllmaschinen haben einen Füllkopf mit einer Durchflusssteuerung, welche die jeweilige gewünschte Menge des Abfüllgutes portioniert.

Für nieselfähiges Schüttgut sind Volumenrotationsfüller bekannt. Der Füllkopf wird entsprechend der Dichte des zu füllenden Gutes eingestellt und ein konstantes Volumen in den entsprechenden Abfüllbehälter geleitet. Der Nachteil dieser Abfüllanlagen liegt in der Dichteschwankung der zugeführten Produkte. Waschmittel kann z.B. aus dem Silo oder direkt aus der Beflockungsanlage zur Abfüllanlage geleitet werden und so durch die unterschiedlichen Schütthöhen eine unterschiedliche Dichte aufweisen. Weiter sind durch die Ausgestaltung der volumetrisch arbeitenden Füllköpfe die Volumen Bereiche und damit die Gewichtsbereiche des abzufüllenden Füllguts begrenzt, d.h. solche Anlagen lassen sich nur mit einem begrenzten Messbereich betreiben. Volumetrisch arbeitende Rotationsfüller besitzen meist eine nachgeschaltete Kontrollwaage, welche das Abfüllgewicht der Packungen kontrolliert und die Füllkopfinenge entsprechend nachjustiert. Der Nachteil dieser Abfüllanlagen liegt in der relativ weit vom eigentlichen Abfüllprozess entfernten Kontrollwägung, welche einen höheren Ausschuss der fehlgewichtigen Produkte aufgrund der zeitlichen Verzögerung der nachgeschalteten Kontrollwaage mit sich bringt.

Nach dem Stand der Technik sind Rotationsfüller bekannt, welche auf der Wägetechnik 5 mittels DMS beruhen. Hierbei zeigt sich der Nachteil der langen Einschwingzeit der DMS Wägezelle mit Lastaufnahme. Diese Eigenschaft wird durch die Rotation des kompletten Füllkopfes noch verstärkt. Außerdem weisen DMS Wägezellen eine Durchbiegung bei zunehmender Last auf, welche beispielsweise im Stand der Technik mit einer zusätzlichen Korrekturzelle behoben werden muss (DE 372 78 66 C2).

Bei einem Einbau der Wägetechnik in den Kopf einer rotatorisch arbeitenden Abfüllmaschine mit kreisförmigem Grundaufbau zeigen sich die Problematiken bei den Einbauverhältnissen einer Messzelle. Die nach dem Stand der Technik gebräuchlichen Wägezellen haben ein quaderförmiges Gehäuse, beim Einbringen in einen Teilkreis erkennt man, dass der kleinstmögliche Teilkreisdurchmesser durch die geometrische Form der Messzelle stark eingeschränkt wird.

Auch die nach dem Stand der Technik in EP 1 409 971 aufgezeigten Wägezellen mit einer breiten Festlandanschraubung und einer trapezförmig verlaufenden Parallelogrammführung sind nicht für die Aufnahme in einen Teilkreis geeignet.

Die EP 518202 B1 offenbart einen Wägeaufnehmer, bei dem die einzelnen Funktionseinheiten des Blocksystems mittels dünner Schnitte herausgearbeitet sind. Die Abbildungen zeigen einen schmal aufgebauten Wägeaufnehmer, es besteht aber wieder das Problem, dass die größte Breite des Systems das kraftkompensierende Magnetsystem darstellt und dies wie im Stand der Technik bekannt gegenüber der Lastaufnahmeseite liegt. Der Teilkreisdurchmesser wird also auch hier maßgeblich durch die Magnetanordnung bestimmt.

Einen weiteren Nachteil bringen die Längenabmessungen der Wägezellen mit sich. Der Stand der Technik führt Wägezellen auf, die einen parallelogrammgeführten Lastaufnehmer aufweisen, wobei zwischen den oberen und unteren Parallelogrammlenkern das elastische Getriebe ausgeführt ist, welches eine beaufschlagte Kraft in ihrer Größe reduziert. Der Stand der Technik führt dabei verschiedene Wägeaufnehmer mit bis zu vier Übersetzungsstufen auf, wobei sehr hoch übersetzte Systeme mit bis zu 1500:1 vornehmlich in statischen Applikationen zu finden sind.

Die nach dem Stand der Technik bekannten Wägeaufnehmer sind mit einem Kompensationshebel ausgeführt, welcher bis zu dem Kompensationssystem verlängert wird. Im Falle der elektromagnetischen Kraftkompensation ist dies ein System, bestehend aus Spule und einem Permanentmagnetsystem. Der Magnet ist - wie bspw. in der DE 19923207 C1 - beschrieben hinter dem untersetzenden Getriebe angeordnet. An dem feststehenden Teil sind unter anderem die oberen und unteren Parallelogrammlenker für die bewegliche Lastaufnahme ausgeführt.

Der Stand der Technik stellt bei zerspanend gefertigten monolithischen Wägesystemen also eine räumlich hintereinander liegende Anordnung von Lastaufnahme, Übersetzungshebel, feststehendem Grundkörper und Magnetsystem dar. Weiter zeigt uns der Stand der Technik einen von Blockmaterial umbauten Magneten, um eine hohe Messgenauigkeit des Systems zu erreichen. Für den Fachmann ist hier erkennbar, dass ein solches System für eine kreisförmige Anordnung mit dem Ziel eines möglichst kleinen Teilkreisdurchmessers nicht geeignet ist.

Eine Ausführung mit einem zwischen den beiden Parallelogrammträgern angeordneten Magneten (bspw. in der DE 3243350 C2) kann zwar platzsparend angeordnet werden, jedoch beschränkt das Hebelgesetz und die begrenzte Übersetzung des Systems bei dieser Anordnung den Einsatz auf einen sehr eingeschränkten Gewichtsbereich.

Für die Eignung eines Wägeaufnehmers nach dem Prinzip der elektromagnetischen Kraftkompensation in einer kreisförmigen Anordnung ist die Ausbildung einer möglichst schmalen Bauform der Wägezelle wesentlich. Der Nachteil einer solchen Ausführung liegt in der Schwächung des Robervalgetriebes hinsichtlich Torsion senkrecht zur Krafteinleitung in Querrichtung des Blocksystem durchlaufend. Aus dem Stand der Technik ist bekannt, dass monolithisch ausgebildete Wägeaufnehmer zwischen der Lastaufnahme und dem ersten Hebel (und den weiteren Übersetzungshebeln) vorteilhaft mit einem Koppelelement, bestehend aus einem Zwischensteg und zwei Dünnstellen, ausgebildet sind. Weiter wird im Stand der Technik vorteilhaft ausgeführt, dass eine Dünnstelle in der ersten Koppelstange in Längsrichtung des Lastaufnehmers ausgeführt ist, um Torsionsmomente auf die Übersetzungshebel zu vermeiden. Als Beispiel sei hier auf die Schrift EP 291 258 A2, speziell Abbildung 2, verwiesen.

Die Kombination eines schmalen Robervalgetriebes (zur Zwangsparallelführung der Lastaufnahme) und der genannten aufgeführten Dünnstelle führt zu einem wenig torsionssteifen Wägeaufnehmer bei exzentrischer Krafteinleitung in Blockquerrichtung. Deshalb wurde in der EP 1550849A2 aufgeführt, den Parallelogrammlenker entsprechend breiter als das Blocksystem auszuführen, was einen erheblichen Mehraufwand gegenüber dem ursprünglich primär zweidimensional ausgeführten Wägeaufnehmer darstellt.

Aus der DE 200 07 781 U1 ist ein Wägeaufnehmer mit mehreren Übersetzungshebeln bekannt, bei dem ein Kalibriergewicht wahlweise auf einen Hebelabschnitt abgesenkt oder von diesem abgehoben werden kann. Sofern das Kalibriergewicht nicht benutzt wird, kann es über einen separaten Hubmechanismus gegen den als Festland ausgebildeten Grundkörper geschoben werden, der dann als Anschlag dient.

Aufgabe der Erfindung ist es angesichts der vorgenannten Nachteile, einen Wägeaufnehmer zu schaffen, der (im Hinblick auf den Abstand zwischen Lastaufnehmer und Festland) möglichst kurz ausgebildet ist. Gleichzeitig soll die Bauweise möglichst schmal und kompakt ausfallen und eine sichere und von Störkräften weitgehend befreite, ausreichende Übersetzung bieten. Dabei soll bei kreisförmiger Anordnung auf einem möglichst kleinen Teilkreis ein Maximum an Wägezellen vorsehbar sein.

Die Aufgabe wird gelöst durch einen Wägeaufnehmer nach Anspruch 1.

Die Erfindung geht dabei von der Erkenntnis aus, dass ein Wägeaufnehmer dann besonders platzsparend und kurz ausgebildet werden kann, wenn der Lastaufnehmer einen Anschlag für einen Hebel des Übersetzungsmechanismus aufweist. Alternativ oder ergänzend kann der Anschlag auch für Komponenten eines Kraftkompensationssystems vorgesehen sein oder auch für ein Ausgleichsgewicht zum wenigstens teilweisen Ausgleich einer auf den Lastaufnehmer aufgebrachten oder dem System innewohnenden Vorlast. Insbesondere für den Fall, dass bei einem Wägeaufnehmer eine Hebelkonstruktion so ausgebildet ist, dass der in Kraftflussrichtung letzte Hebel sich in Richtung auf den Lastaufnehmer erstreckt ist, ein solcher erfmdungsgemäßer Anschlag hilfreich.

Für die kompakte Bauform des Wägeaufnehmers, die durch die vorbeschriebene Hebelführung erreicht werden kann, ist als Überlastschutz ein Anschlag für vorzugsweise den letzten Hebel vorzusehen. Während im Stand der Technik ein solcher Anschlag relativ zum Festland ausgeführt wird, nutzt der hier vorgestellte Wägeaufnehmer in erfinderischer Weise statt des Festlandes den Lastaufnehmer zur Ausbildung des Anschlags. Dadurch wird vorteilhaft auf die Bereitstellung eines Festlandabschnitts extra für einen solchen Anschlag verzichtet, was die Bauform insgesamt vereinfacht. Vielmehr kann der letzte Hebel oder ein daran angeordnetes weiteres Element bei Überlast gegen den Lastaufhehmer oder ein daran angeordnetes Anschlagsteil schlagen, und so eine Überdehnung von Gelenken bzw. eine ungewollt hohe Auslenkung von Hebeln vermeiden.

Im Sinne dieser Erfindung ist daher ein Wägeaufnehmer vorgesehen, der vorzugsweise monolithisch ausgebildet ist. Er ist für den Einsatz in einer elektronischen Waage nach dem Prinzip der elektromagnetischen Kraftkompensation gedacht, wobei der Wägeaufnehmer Ausdehnungen in drei zueinander verschiedene Richtungen X, Y und Z aufweist. Weiterhin ist ein elektromagnetisches Kraftkompensationssystem vorgesehen, welches eine Spule, einen Magneten und/oder ein Teil eines Positionsdetektionssystems umfasst.

Der Wägeaufnehmer weist dabei einen Abschnitt eines feststehenden Grundkörpers auf, an dem Parallelführungselemente angelenkt sind, die sich im Wesentlichen längs einer ersten Richtung X erstrecken und einen in die Messrichtung (Richtung Y) beweglichen Lastaufnehmer relativ zum Grundkörper führen. Dabei ist wenigstens ein Hebel und wenigstens ein Koppelelement als Reihe von wirkungsmäßig hintereinander geschalteten Elementen vorgesehen, wobei die Elemente zur Übertragung und/oder Übersetzung einer auf den Lastaufnehmer einwirkenden Last und zu deren Weiterleitung zu dem Kraftkompensationssystem hin ausgebildet sind.

An einem Hebelarm des in Kraftflussrichtung letzten Hebels der in Reihe geschalteten Elemente ist dabei wenigstens eine Komponente des Kraftkompensationssystems angeordnet.

Gegenüber diesen aus dem Stand der Technik bekannten Wägeaufnehmern unterscheidet sich der vorliegende erfindungsgemäße Wägeaufnehmer dadurch, dass der Lastaufnehmer in Y-Richtung und/oder in Z-Richtung einen Anschlag für den letzten Hebel oder für wenigstens eine daran angeordnete Komponente, wie bspw. ein Ausgleichsgewicht, aufweist.

Im unbestromten oder überlasteten Zustand des Wägeaufnehmers kann der in Kraftflussrichtung letzte Hebel zu weit ausgelenkt werden, wenn nicht ein entsprechender Anschlag als Wegbegrenzung vorgesehen ist. Anstatt diesen Anschlag gemäß Stand der Technik am Festland vorzusehen wird er nun platzsparend und funktionell unmittelbar an dem Lastaufnehmer ausgebildet, mit dem der entsprechende Hebelarm dann erfindungsgemäß zusammenwirkt. Alternativ kann auch ein an dem Hebel angeordnetes Ausgleichsgewicht oder eine andere Komponente gegen den Lastaufnehmer schlagen, wenn die Belastung oder Entlastung des Wägeaufnehmers eine entsprechende Bewegung auslöst.

Ergänzend ergibt sich dabei der Vorteil, dass der letzte Hebel, der sich vorzugsweise in Richtung des Lastaufnehmers erstrecken soll, keine zusätzlichen Anbauteile oder Formgebungen erfordert, um mit einem vom Festland vorkragenden Abschnitt als Anschlag zusammenzuwirken. Statt dessen kann der Hebel beispielsweise geradlinig in Kraftflussrichtung weiter auf den Lastaufnehmer zu geführt werden, um dort über eine einfache Anschlagsvorrichtung gesichert zu werden. Weder dafür vorkragendes Festland noch speziell für die Anschlagfunktion am Hebel vorzusehende Extremitäten oder besondere Hebelgeometrien sind erforderlich. Dies vereinfacht die Hebelgestaltung und damit den Wägeaufnehmer vorteilhaft.

Nach einher weiteren vorteilhaften Ausführungsform der Erfindung ist vorgesehen, dass der Anschlag durch ein mittelbar oder unmittelbar am Lastaufnehmer angeordnetes Anschlagsteil gebildet wird. Das Anschlagsteil ist dabei vorzugsweise ein an dem Lastaufnehmer zu befestigendes Element, welches beispielsweise in den Innenraum des Wägeaufnehmers hineinragt, um dort eine Bewegung des letzten Hebels in Y-Richtung zu begrenzen. Ergänzend oder alternativ kann dieses oder ein weiteres Anschlagsteil erfindungsgemäß auch eine Bewegung in Z-Richtung unterbinden, wenn es dazu am Lastaufnehmer geeignet angeordnet bzw. befestigt wird. Erfindungsgemäß soll das Anschlagsteil einstellbar bzw. justierbar sein, um den maximalen Auslenkungsweg des Hebels oder der von ihm getragenen Komponenten vorzugeben.

Das Anschlagsteil kann auch mittelbar am Lastaufnehmer befestigt sein, indem es über eine weitere Komponente mit dem Lastaufnehmer verbunden wird, während diese weitere Komponente auch vorwiegend einem anderen Zweck dienen kann.

Eine weitere Ausführungsform der Erfindung sieht vor, dass der Anschlag mittelbar oder unmittelbar durch wenigstens eine Ausnehmung des Lastaufnehmers gebildet wird. Dabei soll der letzte Hebel und/oder ein an ihm angeordnetes Ausgleichsgewicht und/oder eine der Komponenten des Kraftkompensationssystems zumindest auch zum Zweck des Anschlagens in die Ausnehmung hineinragen oder diese durchragen. Die Ausnehmung kann eine Vertiefung im Lastaufnehmer sein, oder auch eine den Lastaufnehmer vollständig durchdringende Öffnung.

Während vorstehend ein am Lastaufnehmer angeordnetes Anschlagsteil zur Wahrnehmung der Anschlagsfunktion beschrieben wurde, kann die letztgenannte Ausführung ohne ein solches separat ausgebildetes Anschlagsteil auskommen, da die Umrandung der Ausnehmung in diesem Fall die Funktion des Anschlagsteils übernimmt.

Da die Hindurchführung einzelner Komponenten des Wägeaufnehmers durch eine Ausnehmung des Lastaufnehmers aus unterschiedlichen Gründen vorteilhaft sein kann (bessere Hebelwirkung, verbesserte Zugänglichkeit), vereinfacht die gleichzeitige Verwendung der Ausnehmung im Lastaufnehmer als Anschlag die Bauweise des Wägeaufnehmers auf elegante Weise.

Erfindungsgemäß kann es sich um eine oder auch mehrere Ausnehmungen handeln, die den Lastaufnehmer vorzugsweise vollständig durchsetzen. So ist etwa eine zentrisch angeordnete Ausnehmung möglich, durch welche ein dann ebenfalls zentrisch geführter Hebelabschnitt des letzten Hebels hindurchragt. Diese Ausnehmung kann insbesondere symmetrisch zu einer in X-Y-Richtung verlaufenden Ebene ausgebildet sein, wobei hierzu auch eine Ausnehmung gehören soll, die sich ausgehend von der Ebene auf beide Seiten davon forterstreckt. Die Ebene teilt den Lastaufnehmer vorzugsweise, aber nicht zwingend, symmetrisch.

Alternativ sind auch Ausnehmungen denkbar, die symmetrisch beabstandet zur vorbeschriebenen Mittelebene durch den Lastaufnehmer hindurchführen, wobei dann auch der in seiner Bewegungsfreiheit zu begrenzende letzte Hebel oder die von ihm getragenen Komponenten vorzugsweise symmetrisch aufzuteilen sind, um in die genannten Ausnehmungen hineinzuragen.

Die Ausnehmung muss jedoch nicht zwingend symmetrisch zur vorbeschriebenen Ebene angeordnet sein, vielmehr ist auch eine dazu asymmetrische Anordnung der Ausnehmung im Lastaufnehmer denkbar - mit entsprechender Anordnung der zu sichernden Komponente. Die asymmetrische Hebelführung und die sich daraus ergebende asymmetrische Anordnung der Ausnehmung im Lastaufnehmer kann insbesondere aus Platzgründen sinnvoll sein, wenn durch die asymmetrische Bauweise besonders kompakt gebaut werden kann.

Schließlich kann eine oder können mehrere Ausnehmungen den Randbereich des Lastaufnehmers berühren, so dass sie vom Material des Lastaufnehmers nicht vollständig umschlossen sind. In diesem Fall wäre die durch die Ausnehmung ragende Komponente seitlich zugänglich, wodurch beispielsweise ein Montagevorteil erzielt wird. Auch die Fertigung derartiger Ausnehmungen kann auf einfache Weise erfolgen.

Eine weitere vorteilhafte Ausführungsform der Erfindung sieht vor, dass das Ausgleichsgewicht, welches mit dem Lastaufnehmer als Anschlag zusammenwirken kann, von der dem Grundkörperabschnitt abgewandten Seite des Lastaufnehmers anbringbar ist. Damit lässt sich das Ausgleichsgewicht leicht montieren oder justieren, was insgesamt die Handhabung des Wägeaufnehmers vereinfacht. Die räumliche Ausdehnung des Ausgleichsgewichts kann dabei Einfluss nehmen auf den freien Weg, über welchen der letzte Hebel auslenkbar ist. Ein beispielsweise in Y-Richtung größer ausgedehntes Ausgleichsgewicht schlägt früher an die Ausnehmungsinnenseiten des Lastaufnehmers an als ein in dieser Richtung kleiner ausgebildetes Gewicht. So kann durch Wahl der Abmessungen des Ausgleichsgewichts die maximal zulässige Auslenkung des letzten Hebels oder seiner Komponenten weitgehend unabhängig von der Gestalt der Ausnehmung festgelegt werden, was durch die leichte Zugänglichkeit zusätzlich vereinfacht wird.

Das Ausgleichsgewicht kann sich aus mehreren, in ihrer Summe das gesamte Ausgleichsgewicht bestimmenden Einzelgewichten zusammensetzen. Wenigstens eines dieser Gewichte kann rotationssymmetrisch ausgebildet sein, wobei von mehreren - gegebenenfalls unterschiedlich ausgebildeten - Ausgleichsgewichten wenigstens dieses eine in die Ausnehmung des Lastaufnehmers hineinragt. Bei ebenfalls rotationssymmetrisch ausgebildeter Ausnehmung im Lastaufnehmer wird durch die Formgebung des Ausgleichsgewichts die zulässige Auslenkung in Y- und/oder Z-Richtung festgelegt durch den entstehenden Ringraum zwischen Gewicht und Ausnehmung.

Das Ausgleichsgewicht kann insbesondere dazu dienen, eine Vorlast auszugleichen oder auch den Einfluss von Vibrationen (bspw. Bodenvibrationen) zu reduzieren.

Nach einer weiteren vorteilhaften Ausführungsform der Erfindung ist vorgesehen, dass zur gezielten Positionierung des von dem wenigstens einen Ausgleichsgewicht und/oder dem letzten Hebel gebildeten Schwerpunkts eine Justierung vorgesehen ist. Insbesondere bei bewegten Wägeaufnehmern treten Massenkräfte auf, welche unter anderem die Lagerstellen der Hebel belasten können. Sofern der Wägeaufnehmer beispielsweise um eine zur Y-Richtung parallele Achse rotiert, entstehen Fliehkräfte an dem letzten Hebel und dem wenigstens einen Ausgleichsgewicht. Diese Fliehkräfte müssen von der Lagerung des letzten Hebels aufgenommen werden. Um gleichzeitig Biegemomente innerhalb des Hebels zu vermeiden, soll erfindungsgemäß die Justierung des gemeinsamen Schwerpunkts der Anordnung aus den Ausgleichsgewichten und/oder dem letzten Hebel möglich sein. Dies kann in einfacher Form durch eine Justierschraube realisiert werden, deren eigener Schwerpunkt relativ zu den vorgenannten Komponenten verstellbar ist, so dass sich die gemeinsamen Massenkräfte (aus Justierschraube und den vorgenannten Komponenten) bei einem bewegten Wägeaufnehmer hinsichtlich einer Lagerstelle des letzten Hebels insgesamt ausgleichen bzw. kompensieren lassen. Insbesondere eine Schwerpunktsjustierung in Y- und/oder Z-Richtung soll erfindungsgemäß möglich sein.

Erfindungsgemäß kann das Ausgleichsgewicht auch als Vorlastausgleich vorgesehen sein.

Weitere vorteilhafte Ausführungsformen ergeben sich aus den Unteransprüchen.

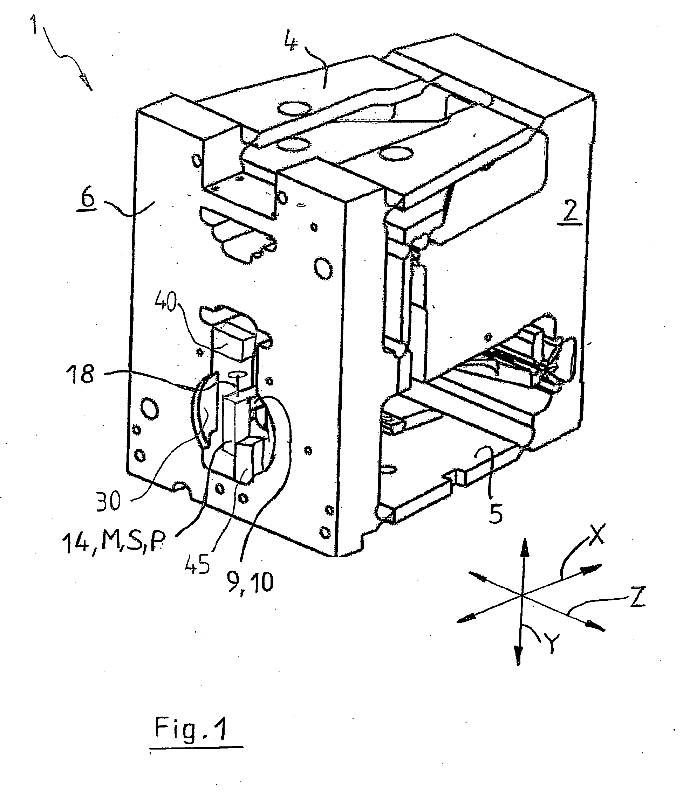

Nachfolgend wird eine Ausführungsform der Erfindung anhand eines Figurenbeispiels näher erläutert. Die einzige Fig. 1 zeigt dabei in schematischer perspektivischer Ansicht einen Wägeaufnehmer 1.

Ein Abschnitt 2 eines Grundkörpers, der als Festland zu bezeichnen wäre, lagert dabei zwei Parallelführungselemente 4 und 5, die sich in Richtung X nach vorne auf einen Lastaufnehmer 6 erstrecken. Ein nicht näher dargestellter Hebelmechanismus, der im Wesentlichen zwischen dem Lastaufnehmer 6 und dem Grundköperabschnitt 2 angeordnet ist, bewirkt die Übersetzung einer in den Lastaufnehmer 6 in Y-Richtung eingeleiteten Gewichtskraft.

In den Lastaufnehmer 6 ist eine Ausnehmung 30 eingebracht, durch welche einige Komponenten des Wägeaufnehmers zu sehen sind. Der Hebelarm 10 eines letzten Hebels 9 erstreckt sich vom Abschnitt 2 kommend in X-Richtung bis in die Ausnehmung 30 hinein. Der letzte Hebel 9 trägt eine schematisch dargestellte Komponente M, S, P eines Kraftkompensationssystems, mit der die Auslenkung des Hebels 9 kompensiert wird, um daraus einen Messwert abzuleiten. Die Komponenten M, S, P können auch etwas ins Innere des Wägeaumehmers 1 verschoben angeordnet sein. Auch kann ein Ausgleichsgewicht 14 anstelle oder zusätzlich zu den vorgenannten Komponenten am Hebelarm 10 angeordnet sein.

Das Ausgleichsgewicht 14 trägt eine als Schraube ausgebildete Justierung 18, die durch Schraubbewegung ihren Schwerpunkt relativ zum Hebel 9 verlagert, um Massenkräfte aufgrund von Bewegungen des Wägeaufnehmers zu kompensieren.

Erfindungsgemäß weist der Lastaufnehmer 6 einen Anschlag für den letzten Hebel 9 oder die von ihm getragenen Komponenten auf. Beispielhaft ist ein oberes Anschlagsteil 40 dargestellt, welches eine Schwenkbewegung des Hebels 9 in Y-Richtung begrenzt. Die Justierung 18 kann hier mit dem Anschlagsteil 40 zusammenwirken, wobei der Anschlag aber auch beliebig anders und insbesondere ohne Einbindung der Justierung 18 ausgebildet.

Alternativ oder ergänzend kann ein weiteres Anschlagsteil 45 vorgesehen sein, welches eine Bewegung des Hebels 9 oder der von ihm getragenen Komponenten in Z-Richtung limitiert. Auch kann die Wandung der Ausnehmung 30 selbst als unmittelbare Anschlagsfläche dienen. (Zwischen den Komponenten 14, M, S, P einerseits und dem Anschlagsteil 45 besteht tatsächlich ein Abstand, der in Fig. 1 jedoch nicht dargestellt ist.

In Fig. 1 ist die Anordnung des Anschlagsteils (40, 45) im Inneren der Ausnehmung 30 dargestellt. Allerdings kann das Anschlagsteil auch auf der Innen- oder Außenseite des Lastaufnehmers 6 angeordnet sein.

## Patentansprüche

1. Wägeaufnehmer (1), vorzugsweise monolithisch, für eine elektronische Waage nach dem Prinzip der elektromagnetischen Kraftkompensation, mit Ausdehnungen in eine erste Richtung (X), eine dazu vorzugsweise senkrechte zweite Richtung (Y) und eine zu den Richtungen (X) und (Y) senkrechte dritte Richtung (Z), mit wenigstens einem elektromagnetischen Kraftkompensationssystem, welches eine Spule (S) und/oder einen Magneten (M) und/oder ein Teil eines Positionsdetektionssystems (P) umfasst, und
a) mit einem Abschnitt (2) eines feststehenden Grundkörpers, an dem Parallelführungselemente (4, 5) angelenkt sind, die sich im wesentlichen längs der Richtung (X) erstrecken und einen in die Messrichtung (Y) beweglichen Lastaufnehmer (6) relativ zum Grundkörper führen,
b) wobei wenigstens ein Hebel (9) und wenigstens ein Koppelelement als Reihe von wirkungsmäßig hintereinander geschalteten Elementen vorgesehen ist, und wobei die Elemente zur Übertragung und/oder Übersetzung einer auf den Lastaufnehmer (6) einwirkenden Last und zu deren Weiterleitung zu dem Kraftkompensationssystem hin ausgebildet sind, und
c) wobei an einem Hebelarm (10) des letzten Hebels (9) der Reihe eine Komponente (M, S, oder P) des wenigstens einen Kraftkompensationssystems angeordnet ist,
**dadurch gekennzeichnet, dass**
d) der Lastaufnehmer (6) in Y-Richtung und/oder in Z-Richtung einen Anschlag für den letzten Hebel (9) oder für wenigstens eine an dem letzten Hebel (9) angeordnete Komponente (14, M, S, oder P) aufweist.

2. Wägeaufnehmer (1) nach Anspruch 1, **dadurch gekennzeichnet, dass** der Anschlag durch ein mittelbar oder unmittelbar am Lastaufnehmer (6) angeordnetes Anschlagsteil (40, 45) gebildet wird.

3. Wägeaufnehmer (1) nach einem der vorigen Ansprüche, **dadurch gekennzeichnet, dass** der Anschlag mittelbar oder unmittelbar durch wenigstens eine Ausnehmung (30) des Lastaufnehmers (6) gebildet wird, wobei der letzte Hebel (9) und/oder ein an dem letzten Hebel (9) angeordnetes Ausgleichsgewicht (14) und/oder eine der Komponenten (M, S, oder P) zumindest auch zum Zweck des Anschlagens in die Ausnehmung hineinragt oder diese durchragt.

4. Wägeaufnehmer (1) nach dem vorhergehenden Anspruch, **dadurch gekennzeichnet, dass** die wenigstens eine Ausnehmung (30) symmetrisch oder asymmetrisch zu einer den Lastaufnehmer (6) in X-Y-Richtung teilenden, gedachten Ebene ausgebildet ist.

5. Wägeaufnehmer (1) nach einem der beiden vorhergehenden Ansprüche, **dadurch gekennzeichnet, dass** die wenigstens eine Ausnehmung (30) nicht geschlossen ist.

6. Wägeaufnehmer (1) nach einem der vorigen Ansprüche, **dadurch gekennzeichnet, dass** ein Ausgleichsgewicht (14) als anschlagende Komponente von der dem Grundkörperabschnitt (2) abgewandten Seite des Lastaufnehmers (6) am letzten Hebel (9) anbringbar ist.

7. Wägeaufnehmer (1) nach einem der vorigen Ansprüche, **dadurch gekennzeichnet, dass** wenigstens ein von gegebenenfalls mehreren Ausgleichsgewichten (14) rotationssymmetrisch ausgebildet ist, und wenigstens dieses eine Ausgleichsgewicht (14) als anschlagende Komponente in eine Ausnehmung (30) des Lastaufnehmers (6) hineinragt.

8. Wägeaufnehmer (1) nach einem der vorigen Ansprüche, **dadurch gekennzeichnet, dass** zur gezielten Positionierung des gemeinsamen Schwerpunkts des letzen Hebels und der von ihm getragenen Komponenten (14, M, S, oder P) eine Justierung (18) vorgesehen ist.

9. Wägeaufnehmer (1) nach einem der vorigen Ansprüche, **dadurch gekennzeichnet, dass** das wenigstens eine Ausgleichsgewicht (14) als Vorlastausgleich vorgesehen ist.

## Claims

1. A weighing sensor (1), preferably monolithic, for an electronic balance according to the principle of electromagnetic force compensation, with expansions in a first direction (X), a second direction (Y) that is preferably perpendicular thereto and a third direction (Z) that is perpendicular to the directions (X) and (Y), having at least one electromagnetic force-compensation system which comprises a coil (S) and/or a magnet (M) and/or a portion of a position-detection system (P), and
a) having a section (2) of a fixed base body on which parallel-guide elements (4, 5) are articulated that extend substantially along the direction (X) and guide a load-sensor (6), which can be moved in the measuring direction (Y), relative to the base body,
b) wherein at least one lever (9) and at least one coupling element are provided as a series of elements that are effectively connected one after the other, and
wherein the elements are formed for the transfer and/or transmission of a load acting on the load-sensor (6) and for the relaying thereof towards the force-compensation system, and
c) wherein arranged on a lever arm (10) of the last lever (9) of the series there is a component (M, S, or P) of the at least one force-compensation system,
**characterised in that**
d) the load-sensor (6) has in the Y-direction and/or in the Z-direction a stop for the last lever (9) or for at least one component (14, M, S, or P) that is arranged on the last lever (9).

2. A weighing sensor (1) according to claim 1, **characterised in that** the stop is formed by a stop portion (40, 45) that is arranged indirectly or directly on the load-sensor (6).

3. A weighing sensor (1) according to one of the previous claims, **characterised in that** the stop is formed indirectly or directly by means of at least one recess (30) of the load-sensor (6), wherein the last lever (9) and/or a counterbalance weight (14) that is arranged on the last lever (9) and/or one of the components (M, S, or P) at least also for stopping purposes projects into the recess or projects through it.

4. A weighing sensor (1) according to the preceding claim, **characterised in that** the at least one recess (30) is formed symmetrically or asymmetrically with respect to an imaginary plane that divides the load-sensor (6) in the X-Y-direction.

5. A weighing sensor (1) according to one of the two preceding claims, **characterised in that** the at least one recess (30) is not closed.

6. A weighing sensor (1) according to one of the previous claims, **characterised in that** a counterbalance weight (14) can be fitted as a stopping component on the last lever (9) from the side of the load-sensor (6) that is remote from the base-body section (2).

7. A weighing sensor (1) according to one of the previous claims, **characterised in that** at least one of, if applicable, a plurality of counterbalance weights (14) is formed so that it is rotationally symmetrical, and at least this one counterbalance weight (14) projects as a stopping component into a recess (30) of the load-sensor (6).

8. A weighing sensor (1) according to one of the previous claims, **characterised in that** an adjustment (18) is provided for the controlled positioning of the common centre of gravity of the last lever and of the components (14, M, S, or P) carried by it.

9. A weighing sensor (1) according to one of the previous claims, **characterised in that** the at least one counterbalance weight (14) is provided as a preload-counterbalance.

## Revendications

1. Capteur de pesée (1), de préférence monolithique, pour une balance électronique selon le principe de la compensation électromagnétique de forces, avec des dimensions dans une première direction (X), une deuxième direction (Y) qui est de préférence perpendiculaire à ladite premier direction (X) et une troisième direction (Z) perpendiculaire aux directions (X) et (Y), avec au moins un système de compensation électromagnétique de forces qui comprend une bobine (S) et/ou un aimant (M) et/ou une partie d'un système de détection de position (P), et
a) avec une section (2) d'un corps de base fixe, sur laquelle sont articulés des éléments de guidage parallèles (4, 5), qui s'étendent sensiblement le long de la direction (X) et guident un capteur de charge (6) mobile dans la direction de mesure (Y) par rapport au corps de base,
b) dans lequel au moins un levier (9) et au moins un élément de couplage sont prévus sous la forme d'une série d'éléments raccordés l'un derrière l'autre de manière fonctionnelle et dans lequel les éléments sont conformés pour transférer et/ou traduire une charge agissant sur le capteur de charge (6) et la communiquer au système de compensation de forces, et
c) dans lequel un composant (M, S ou P) du au moins un système de compensation de forces est aménagé sur un bras de levier (10) du dernier levier (9) de la série,
**caractérisé en ce que**
d) le capteur de charge (6) présente, dans la direction Y et/ou dans la direction Z, une butée pour le dernier levier (9) ou pour au moins un composant (14, M, S ou P) agencé sur le dernier levier (9).

2. Capteur de pesée (1) selon la revendication 1, **caractérisé en ce que** la butée est formée par une partie de butée (40, 45) agencée directement ou indirectement sur le capteur de charge (6).

3. Capteur de pesée (1) selon l'une quelconque des revendications précédentes, **caractérisé en ce que** la butée est formée directement ou indirectement par au moins un évidement (30) du capteur de charge (6), dans lequel le dernier levier (9) et/ou un contrepoids d'équilibre (14) agencé sur le dernier levier (9) et/ou un des composants (M, S ou P) pénètre au moins aussi à des fins de butée dans l'évidement ou traverse celui-ci.

4. Capteur de pesée (1) selon la revendication précédente, **caractérisé en ce que** le au moins un évidement (30) est réalisé de manière symétrique ou asymétrique par rapport à un plan imaginaire partageant le capteur de charge (6) dans la direction X-Y.

5. Capteur de pesée (1) selon l'une quelconque des revendications précédentes, **caractérisé en ce que** le au moins un évidement (30) n'est pas fermé.

6. Capteur de pesée (1) selon l'une quelconque des revendications précédentes, **caractérisé en ce qu'**un contrepoids d'équilibre (14) peut être appliqué comme composant de butée du côté, opposé à la section de corps de base (2), du capteur de charge (6) sur le dernier levier (9).

7. Capteur de pesée (1) selon l'une quelconque des revendications précédentes, **caractérisé en ce qu'**au moins un des éventuels multiples contrepoids d'équilibre (14) est formé à symétrie de rotation et **en ce qu'**au moins ce contrepoids d'équilibre (14) pénètre comme composant de butée dans un évidement (30) du capteur de charge (6).

8. Capteur de pesée (1) selon l'une quelconque des revendications précédentes, **caractérisé en ce qu'**il est prévu un ajustement (18) pour le positionnement adéquat du centre de gravité commun du dernier levier et du composant (14, M, S ou P) porté par celui-ci.

9. Capteur de pesée (1) selon l'une quelconque des revendications précédentes, **caractérisé en ce que** le au moins un contrepoids d'équilibre (14) est prévu comme compensation de précontrainte.
